# EUROPEAN PATENT SPECIFICATION

(11) **EP 4 145 135 B1**
(45) Date of publication and mention of the grant of the patent: **06.05.2026**
(21) Application number: 21797547.3
(22) Date of filing: 03.02.2021
(51) Int. Cl.: G01N 35/00, G01N 35/10

(54) **AUTOMATIC ANALYSIS DEVICE**
AUTOMATISCHE ANALYSEVORRICHTUNG
DISPOSITIF D'ANALYSE AUTOMATIQUE

(30) Priority: 27.04.2020 JP 2020078414
(43) Date of publication of application: 08.03.2023
(73) Proprietor: HITACHI HIGH-TECH CORPORATION, Tokyo 105-6409 (JP)
(72) Inventor: SUZUKI Akiko, Tokyo 105-6409 (JP); MATSUOKA Shinya, Tokyo 105-6409 (JP); EBIHARA Daisuke, Tokyo 105-6409 (JP); UEDA Mitsuhiko, Tokyo 105-6409 (JP); TOMIDA Shoji, Tokyo 105-6409 (JP)
(74) Representative: Strehl & Partner mbB
(86) International application number: PCT/JP2021/003959
(87) International publication number: WO 2021/220571

(56) References cited:
- WO-A1-2019/198493
- WO-A1-2020/145389
- JP-A- 2003 246 079
- JP-A- 2008 096 221
- JP-A- 2008 298 590
- JP-A- 2011 209 207
- JP-A- 2013 039 732
- JP-A- 2014 134 484
- JP-A- 2014 134 484
- JP-A- 2016 540 221
- JP-A- H05 162 335
- JP-A- H11 271 312
- US-A1- 2005 074 363
- US-A1- 2008 095 668
- US-A1- 2010 203 573
- US-A1- 2019 227 092

## Description

### Technical Field

The present invention relates to an automatic analyzer that uses a reagent to analyze a concentration of a predetermined component in a biological sample (hereinafter referred to as a specimen) such as blood and urine.

### Background Art

As an example of a specimen analyzer capable of performing smooth replacement of a reagent bottle as compared to a specimen analyzer in the related art, PTL 1 discloses that a specimen analyzer includes a container installation unit configured to install a reagent bottle, an openable and closable cover provided in the reagent bottle installation unit, a solenoid configured to lock the cover at an open position, and an information processing unit configured to control locking and unlocking of the cover at the open position by the solenoid, and the cover is locked at the open position when replacing a reagent.

### Citation List

### Patent Literature

PTL 1: JP-A-2011-209207
WO 2019/198493 A1 discloses an electrolyte analyzing device with the features in the preamble of present claim 1. Other conventional analyzers are described in JP 2014 134484 A, US 2008/095668 A1, US 2005/074363 A1, and US 2019/227092 A1.

### Summary of Invention

### Technical Problem

An automatic analyzer that uses a reagent installed in the analyzer to analyze a specimen is known.

As the reagent used in the automatic analyzer, two types of reagents, for example, a reagent prepared individually for each measurement target item (hereinafter referred to as an "assay reagent") and a reagent commonly used for various measurement target items (hereinafter referred to as a "system reagent") are often used.

Of the reagents, a plurality of system reagents are often mounted according to a measurement principle of the analyzer, a cleaning method of the analyzer, and the like.

Here, it is assumed that a user incorrectly removes a system reagent currently being used. In this case, since the system reagent is not supplied, the analyzer cannot continue measurement and thus stops the measurement. The user needs to install the reagent again and perform the measurement again, and thus time until an analysis result is obtained increases.

In the automatic analyzer disclosed in PTL 1 described above, there is described a method in which the container installation unit capable of installing the reagent bottle containing the reagent used in the analysis and the cover for opening or closing the container installation unit are installed, and the cover portion is locked or unlocked.

Further, the cover and a nozzle portion to be inserted into the reagent are configured to be interlocked with each other. A reagent type is recognized when the reagent is placed, and when the reagent type is recognized as a correct reagent type, lowering of the cover and the nozzle is permitted, and when the reagent type is not recognized as the correct reagent type, the lowering of the nozzle is prohibited to prevent incorrect installation. After the reagent is installed, rise of the cover and the nozzle is prohibited except for a timing at which the reagent is to be replaced, thereby preventing the user from incorrectly removing the reagent.

However, in the automatic analyzer disclosed in PTL 1, it is necessary to use the cover that is not necessary for a purpose of installing the reagent in the analyzer. Therefore, a reagent installation unit may be large and complicated.

The invention is made in order to solve the above problems, and provides an automatic analyzer that achieves the prevention of misplacement of reagent types and the prevention of removal of reagents at an incorrect timing with less space and constituent components.

### Solution to Problem

The invention is defined in the appended claims. It includes a plurality of units for solving the above problems, and as an example, an automatic analyzer includes a stopper that is disposed on a movement path of a reagent aspiration nozzle of a nozzle unit and prevents the reagent aspiration nozzle from being inserted into a reagent bottle.

### Advantageous Effects of Invention

According to the invention, it is possible to achieve the prevention of misplacement of reagent types and the prevention of removal of reagents at an incorrect timing with less space and constituent components. Problems, configurations, and effects other than those described above will be further clarified with the following description of embodiments.

### Brief Description of Drawings

[FIG. 1] FIG. 1 is a diagram illustrating an overall configuration of an automatic analyzer according to an embodiment of the present invention.
[FIG. 2] FIG. 2 is a diagram illustrating an example of an outline of a reagent bottle containing a system reagent used in the automatic analyzer of the present invention.
[FIG. 3] FIG. 3 is a diagram illustrating a schematic configuration of a reagent bottle installation unit or a nozzle unit of the automatic analyzer of the present invention.
[FIG. 4] FIG. 4 is a diagram illustrating a schematic configuration of a reagent bottle installation unit and a nozzle unit of the automatic analyzer of the present invention.
[FIG. 5] FIG. 5 is a flowchart at the time of installing a reagent bottle in the automatic analyzer of the present invention.
[FIG. 6] FIG. 6 is a diagram illustrating a positional relationship between a reagent bottle and a stopper at the time of step S4 in FIG. 5.
[FIG. 7] FIG. 7 is a diagram illustrating a positional relationship between a reagent bottle and a stopper at step S6 in FIG. 5.
[FIG. 8] FIG. 8 is a diagram illustrating a positional relationship between a reagent bottle and a stopper at the time of step S7 in FIG. 5.
[FIG. 9] FIG. 9 is a diagram illustrating a positional relationship between a reagent bottle and a stopper after step S8 in FIG. 5.
[FIG. 10] FIG. 10 is a flowchart at the time of removing a reagent bottle in the automatic analyzer of the present invention.
[FIG. 11] FIG. 11 is a diagram illustrating a positional relationship between a reagent bottle and a stopper at the time of step S11 in FIG. 10.
[FIG. 12] FIG. 12 is a diagram illustrating a positional relationship between a reagent bottle and a stopper at the time of step S12 in FIG. 10.

### Description of Embodiments

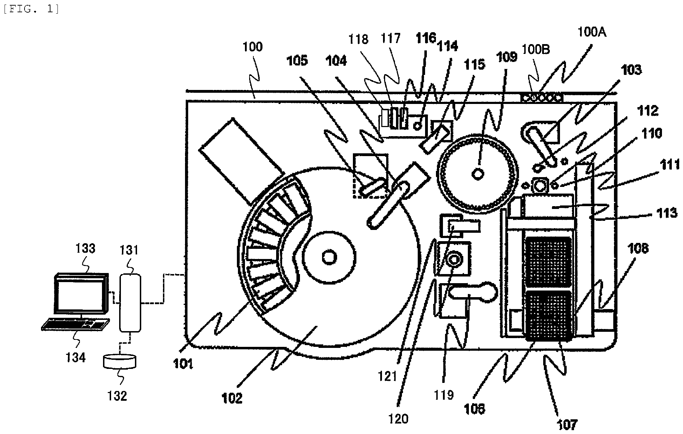

An embodiment of an automatic analyzer of the invention will be described with reference to FIGS. 1 to 12.

Here, in the following embodiment, an immunoanalyzer will be described as an example. However, the automatic analyzer to which a reagent bottle installation configuration disclosed in the invention is applied is not limited to the immunoanalyzer, and the reagent bottle installation configuration can be generally applied to automatic analyzers using system reagents, for example, a biochemical automatic analyzer, a blood testing device, and a liquid chromatograph mass spectrometer.

First, an overall configuration of the automatic immunoanalyzer according to the present embodiment will be described with reference to FIG. 1. FIG. 1 is a diagram illustrating the overall configuration of the automatic immunoanalyzer according to the present embodiment.

The automatic immunoanalyzer 1 illustrated in FIG. 1 is a device configured to react a specimen with a reagent and measure a reaction solution obtained by the reaction, and includes a conveying line 100, a specimen dispensing mechanism 103, an incubator 109, a magazine 108, a conveying mechanism 113, a reagent disc 102, a reagent dispensing mechanism 104, a magnetic particle stirring mechanism 105, a magnetic separation unit 114, a conveying mechanism for BF separation 115, a reaction solution aspiration mechanism 116, a cleaning solution A discharge mechanism 117, a cleaning solution B discharge mechanism 118, a detector conveying mechanism 121, a detection solution discharge mechanism 119, a detector 120, a control unit 131, a recording device 132, a display device 133, and an input device 134.

The conveying line 100 is a line configured to convey a rack 100A, on which a plurality of specimen containers 100B each containing the specimen can be placed, to a specimen dispensing position.

The specimen dispensing mechanism 103 is a nozzle configured to aspirate the specimen contained in the specimen container 100B and discharge the specimen to a reaction container 106 on the incubator 109.

The incubator 109 is a disc configured to react the specimen with the reagent at a constant temperature, and the reaction between the specimen and the reagent is promoted by keeping the temperature of the incubator 109 at a predetermined temperature by a heater (not illustrated). A plurality of reaction containers 106 are held in the incubator 109, and each serve as a site where the specimen and the reagent are mixed and reacted.

The magazine 108 stores a disposable dispensing tip 107 used by being attached to a tip of the specimen dispensing mechanism 103 when sorting and dispensing the specimen, and the reaction container 106 where the specimen sorted by the specimen dispensing mechanism 103 and the reagent are put in to perform the reaction.

The conveying mechanism 113 conveys an unused reaction container 106 held in the magazine 108 to the incubator 109, conveys a used reaction container 106 to a reaction container disposal unit 110, conveys an unused dispensing tip 107 held in the magazine 108 to a dispensing tip mounting position 111, and conveys a used dispensing tip 107 to a dispensing tip disposal location 112.

The reagent disc 102 is a disc configured to store a reagent bottle 101 that contains an assay reagent, and is kept cold in order to prevent deterioration of the assay reagent.

The reagent dispensing mechanism 104 is a nozzle configured to aspirate the reagent stored in the reagent bottle 101 in the reagent disc 102 and discharge the reagent to the reaction container 106.

The magnetic particle stirring mechanism 105 stirs a magnetic particle solution among the reagent in the reagent disc 102.

The conveying mechanism for BF separation 115 conveys the reaction container 106, into which the magnetic particle solution is dispensed, from the incubator 109 to the magnetic separation unit 114.

The magnetic separation unit 114 performs a magnetic separation process on the reaction container 106 into which the magnetic particle solution is dispensed.

The reaction solution aspiration mechanism 116 aspirates a reaction solution from the reaction container 106 conveyed to the magnetic separation unit 114. The cleaning solution A discharge mechanism 117 discharges a cleaning solution A to the reaction container 106 conveyed to the magnetic separation unit 114. The cleaning solution B discharge mechanism 118 discharges a cleaning solution B to the reaction container 106 conveyed to the magnetic separation unit 114.

The detector conveying mechanism 121 conveys the reaction container 106 from the incubator 109 to the detector 120 or from the detector 120 to the incubator 109.

The detection solution discharge mechanism 119 discharges a reagent for detection to the reaction container 106 conveyed to the detector 120 by the detector conveying mechanism 121.

The detector 120 detects a measurement target substance in the reaction solution in the reaction container 106 to which the detection reagent is discharged by the detection solution discharge mechanism 119.

A cleaning step executed in the magnetic separation unit 114 is performed in order to remove substances derived from the specimen remaining in the reaction solution. Here, the cleaning is performed by sequentially using two types of cleaning solutions. An aqueous solution is used as the cleaning solution A, and a coexisting substance such as an inorganic salt is mainly removed. A solution containing an organic solvent is used as the cleaning solution B, and a coexisting substance such as a lipid or a protein is mainly removed.

The detection reagent discharged from the detection solution discharge mechanism 119 is used to adjust a pH or the like in order to obtain liquid properties suitable for the detection after the cleaning step.

The cleaning solutions A and B and a detection solution are collectively referred to as a system reagent.

The control unit 131 is a computer that controls various operations of each member described above and performs an arithmetic process of obtaining a concentration of a predetermined component in the specimen based on a result of detection performed by the detector 120. The control unit 131 includes one or a plurality of processors, a CPU, and the like. The control of the operation of each device by the control unit 131 is executed through various programs. The programs are stored in the recording device 132 and the like, and are read and executed by the CPU.

Operation control processes executed by the control unit 131 may be integrated into one program, may be divided into a plurality of programs, or may be performed through a combination of the one program and the plurality of programs. In addition, a part or all of the programs may be implemented by dedicated hardware or may be modularized.

The recording device 132 is a recording medium that records data and analysis results related to the specimen put into the automatic immunoanalyzer 1, and includes a semiconductor memory such as a flash memory or a magnetic disc such as an HDD. In addition, the recording device 132 also stores various computer programs and the like in order to control the operation of each device in the automatic immunoanalyzer 1 and execute various display processes and the like to be described later.

The display device 133 is a display device such as a liquid crystal display that displays information on the analysis result and a progress of the analysis.

The input device 134 includes a keyboard and a mouse configured to input data.

Next, an outline of an overall analysis flow of the automatic immunoanalyzer 1 according to the present embodiment illustrated in FIG. 1 will be described. Prior to the analysis, consumables such as the reagent bottle 101, the dispensing tip 107, and the reaction container 106 necessary for the analysis are installed in the reagent disc 102 and the magazine 108 in the device.

First, a user puts the rack 100A into the automatic analyzer in a state where the specimen such as blood or urine to be analyzed is put in the specimen container 100B. Here, the unused reaction container 106 and the unused dispensing tip 107 are conveyed to the incubator 109 and the dispensing tip mounting position 111 by the conveying mechanism 113.

Thereafter, the reagent dispensing mechanism 104 accesses the reagent disc 102 such that the reagent stored in the reagent bottle 101 is dispensed into the reaction container 106 on the incubator 109.

Thereafter, when the rack 100A passes through the conveying line 100 and reaches the specimen dispensing position, the specimen is dispensed into the reaction container 106 by the specimen dispensing mechanism 103, and the reaction between the specimen and the reagent is started. The reaction referred to herein means, for example, binding the specimen and a luminescence labeling substance by an antigen-antibody reaction using a luminescence labeling antibody that reacts only with a specific antigen of the specimen as the reagent.

After this operation is completed, the used dispensing tip 107 is conveyed to the dispensing tip disposal location 112 by the conveying mechanism 113 and disposed there.

After the reaction between the specimen and the reagent is started by stirring, another reagent may be further added at a specific timing to perform the reaction. For example, there is a process in which magnetic beads having an antibody bound to surfaces thereof are further bound to the antigen described above. Therefore, the reaction container 106 placed in the incubator 109 for predetermined time is conveyed to the magnetic separation unit 114 by the conveying mechanism for BF separation 115.

In the magnetic separation unit 114, magnetic separation of the specimen is performed, then an unnecessary solution is discharged from the reaction solution aspiration mechanism 116, and, further, the system reagent called the cleaning solution is discharged from the cleaning solution A discharge mechanism 117 and the cleaning solution B discharge mechanism 118.

After the magnetic separation process is completed, the reaction container 106 is conveyed from the magnetic separation unit 114 to the incubator 109 again by the conveying mechanism for BF separation 115.

Regardless of presence or absence of the magnetic separation, the reaction container 106 placed in the incubator 109 for the predetermined time is conveyed to the detector 120 by the detector conveying mechanism 121, and after the detection reagent is discharged by the detection solution discharge mechanism 119, a signal from the reaction solution is detected by the detector 120, and a detection result is output to the control unit 131.

In the control unit 131, the concentration of the predetermined component in the specimen is obtained, and a result is displayed on the display device 133 so as to be notified of to the user, and is recorded in the recording device 132.

After the detection operation is completed, the reaction container 106 is conveyed to the reaction container disposal unit 110 by the detector conveying mechanism 121 and the conveying mechanism 113 and disposed there.

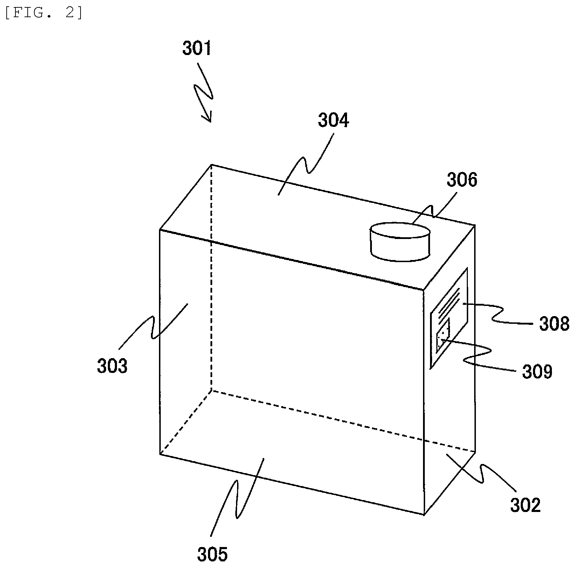

Next, an outline of the reagent bottle that contains the system reagent used in the automatic immunoanalyzer 1 according to the present embodiment will be described with reference to FIG. 2. FIG. 2 is a diagram illustrating an example of the outline of the reagent bottle containing the system reagent used in the automatic analyzer illustrated in FIG. 1.

A reagent bottle 301 illustrated in FIG. 2 is a plastic container having a shape in which a depth is larger than a width.

Among surfaces of the reagent bottle 301, the respective surfaces illustrated in FIG. 2 will be described as a front in the insertion direction 302, a side 303, a top 304, and a bottom 305.

A cylindrical screw lid 306 is provided on the top 304 of the reagent bottle 301 at a position where a reagent aspiration nozzle 400 of a nozzle unit 210 of a reagent bottle installation unit 200 to be described later can be inserted therein.

A label 308 on which a type, an expiration date, and the like of the reagent are described is attached to the front in the insertion direction 302 of the reagent bottle 301. In addition, an RFID tag 309 is attached to the label 308. On the RFID tag 309, information on the system reagent, such as the reagent type, a lot number, the expiration date, whether the system reagent is used, and the number of times of remaining use, is recorded.

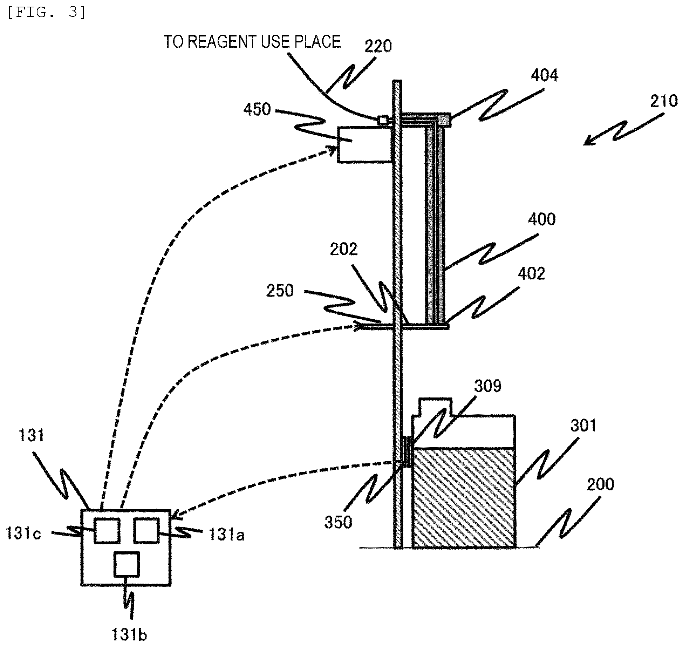

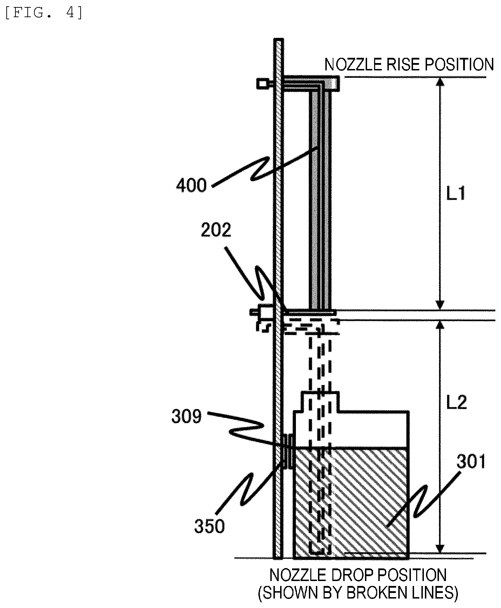

Next, details of the reagent bottle installation unit 200 and the nozzle unit 210, which are main parts of the automatic immunoanalyzer 1 of the present embodiment, will be described with reference to FIGS. 3 and 4. FIGS. 3 and 4 are diagrams illustrating schematic configurations of the reagent bottle installation unit 200 and the nozzle unit 210.

In the automatic immunoanalyzer 1 according to the present embodiment, a plurality of reagent bottle installation units 200 as illustrated in FIG. 3 are installed on a back side of a front cover of the automatic immunoanalyzer 1.

A plurality of reagent bottles containing the respective system reagents can be provided at an installation location. Accordingly, when one reagent bottle becomes empty, another reagent bottle can be automatically used, and thus the device can be continuously operated without stopping due to installation of the system reagent.

As illustrated in FIGS. 3 and 4, the reagent bottle installation unit 200 is a portion in which the reagent bottle 301 containing the reagent used for analysis is installed. The reagent bottle installation unit 200 includes a stopper 202, a stopper drive unit 250, the nozzle unit 210, and an RFID reader 350. In addition, the control unit 131 includes a reagent determination unit 131a, a stopper drive control unit 131b, and a nozzle drive control unit 131c as portions related to the reagent bottle installation unit 200 in the control unit 131.

The nozzle unit 210 is a unit configured to couple a supply flow path 220 that connects a location where the reagent is used and the inside of the reagent bottle 301 installed in the reagent bottle installation unit 200 to the reagent bottle 301. The nozzle unit 210 includes the reagent aspiration nozzle 400 and a nozzle drive unit 450.

The reagent aspiration nozzle 400 is a device configured to couple the supply flow path 220 that connects the location where the reagent is used and the reagent bottle 301 installed in the reagent bottle installation unit 200 to the reagent bottle 301. By driving the nozzle drive unit 450 such as a motor under control of the nozzle drive control unit 131c, the reagent aspiration nozzle 400 is inserted into the reagent in the reagent bottle 301 installed in the reagent bottle installation unit 200 or is removed from the reagent bottle 301.

The reagent aspiration nozzle 400 is connected to the supply flow path 220 and a liquid drive device such as a syringe (not shown), and can supply the reagent from the reagent bottle 301 to a use place on the device.

The stopper 202 is disposed in a space between a lower end 402 of the reagent aspiration nozzle 400 and the reagent bottle 301, which is a position at which the stopper 202 prevents the reagent aspiration nozzle 400 from being inserted into the reagent bottle 301 on a movement path of the reagent aspiration nozzle 400.

In the present embodiment, as illustrated in FIGS. 3 and 4, the stopper 202 is disposed at a position where the lower end 402 of the reagent aspiration nozzle 400 and a top side of the stopper 202 are in contact with each other so as to prevent the reagent in the reagent aspiration nozzle 400 from accidentally dripping and adhering to a hand or the like of an operator who performs a replacement operation when replacing the reagent bottle 301. In particular, the stopper 202 is desirably disposed at a position where a length L1 from an upper end 404 to the lower end 402 of the reagent aspiration nozzle 400 is equal to a movement distance L2 of the reagent aspiration nozzle 400, but is not limited to being disposed at this position, and L1 may also be smaller than L2.

Further, when the reagent aspiration nozzle 400 is coupled to the reagent bottle 301 and it is determined that the reagent is being used, the stopper 202 is disposed at a position where the stopper 202 interferes with the reagent aspiration nozzle 400 so as to prevent the reagent aspiration nozzle 400 from being removed.

A material of the stopper 202 is not particularly limited, and is preferably a material having poor reactivity with the reagent. In addition, rigidity and the like of the stopper 202 is not particularly limited, and it may be desirable to use a material having flexibility in order to reliably prevent deformation of the reagent aspiration nozzle 400 when the lower end 402 of the reagent aspiration nozzle 400 and the top side of the stopper 202 come into contact with each other. A shape of the stopper 202 is not particularly limited, and various shapes such as a flat plate shape can be used.

The stopper 202 is configured to protrude from a side of the reagent bottle installation unit 200 or retreat toward the side, when the stopper drive unit 250 such as a motor is driven under control of the stopper drive control unit 131b, so as to prevent the reagent aspiration nozzle 400 from being set into the reagent bottle 301 or from being removed from the reagent bottle 301.

The reagent determination unit 131a determines whether the reagent bottle 301 installed in the reagent bottle installation unit 200 is appropriate based on reagent information read by the RFID reader 350, and outputs a determination result to the stopper drive control unit 131b and the nozzle drive control unit 131c.

It is desirable that the stopper drive control unit 131b fastens the stopper 202 except for a timing at which the reagent bottle 301 is replaced, and drives and controls the stopper drive unit 250 so as to prevent movement of the reagent aspiration nozzle 400.

In particular, in the present embodiment, when it is determined based on the reagent information that the reagent bottle 301 installed in the reagent bottle installation unit 200 is correct, it is desirable that the stopper drive control unit 131b drives the stopper 202 so as not to prevent access of the reagent aspiration nozzle 400 to the reagent bottle 301. In addition, when it is not determined that the reagent bottle 301 is correct, it is desirable that the stopper drive control unit 131b does not drive the stopper 202 and prevents the movement of the reagent aspiration nozzle 400.

Similarly, the nozzle drive control unit 131c is a portion that controls a rise operation and a drop operation of the reagent aspiration nozzle 400, and it is desirable that the nozzle drive control unit 131c drives and controls the nozzle drive unit 450 so as to fasten the reagent aspiration nozzle 400 except for the timing at which the reagent bottle 301 is replaced.

In particular, in the present embodiment, it is desirable that the nozzle drive control unit 131c drives the reagent aspiration nozzle 400 when it is determined based on the reagent information that the reagent bottle 301 installed in the reagent bottle installation unit 200 is correct, and does not drive the reagent aspiration nozzle 400 and keeps fastening the reagent aspiration nozzle 400 when it is not determined that the reagent bottle 301 is correct.

The RFID reader 350 is a device configured to read the reagent information recorded on the RFID tag 309 attached to the label 308 of the reagent bottle 301, and is installed in the reagent bottle installation unit 200 at a position where the RFID tag 309 can be read at a position where the front in the insertion direction 302 of the reagent bottle 301 is inserted and stopped.

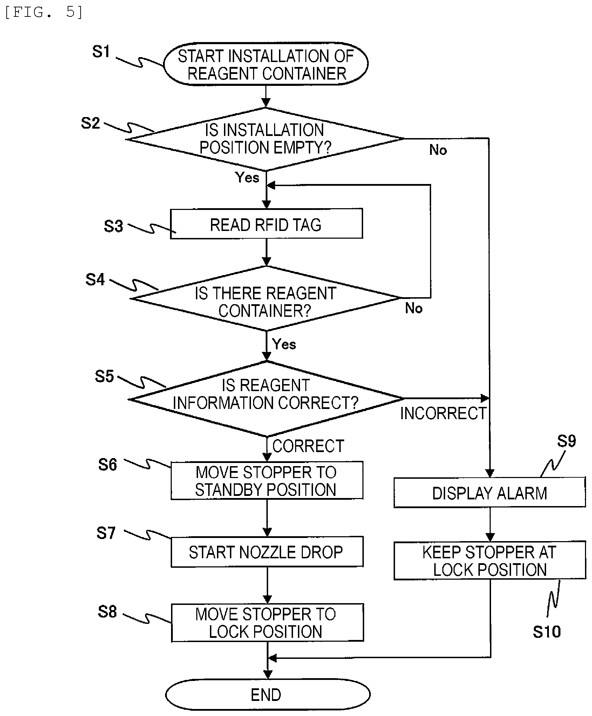

Next, a process of installing and removing the system reagent in and from the reagent bottle installation unit 200 in the automatic analyzer to which the invention is applied will be described with reference to FIGS. 5 to 12.

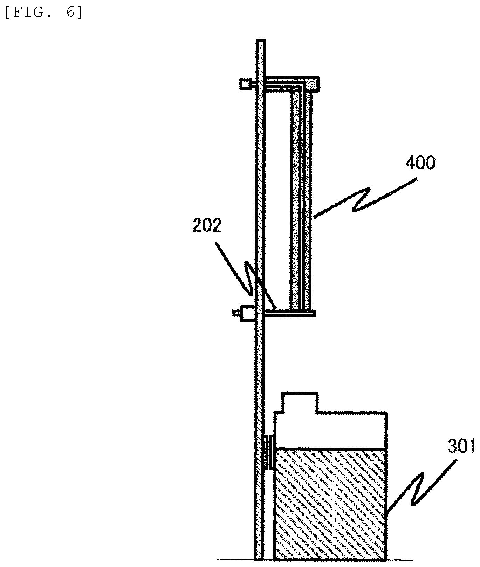

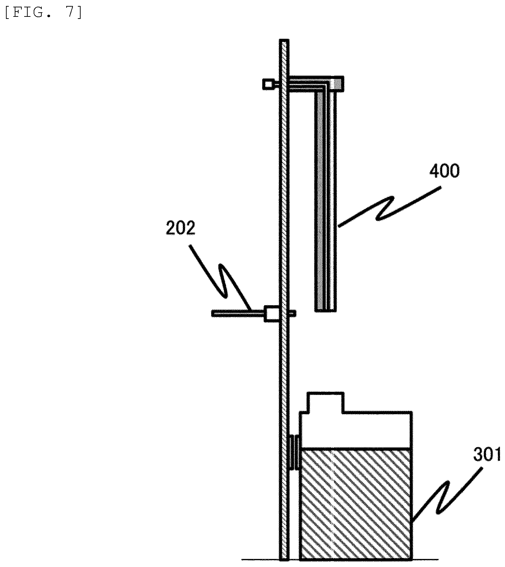

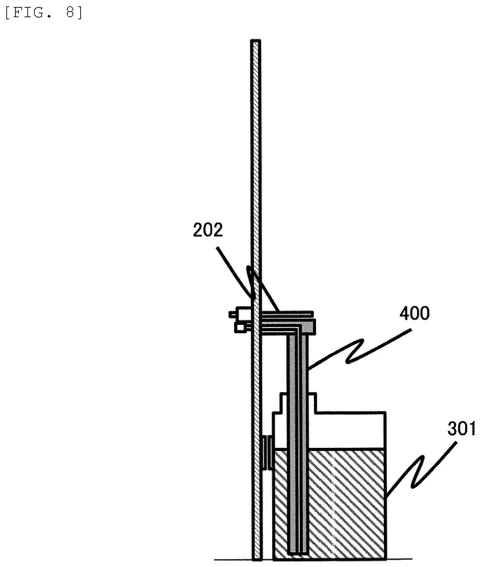

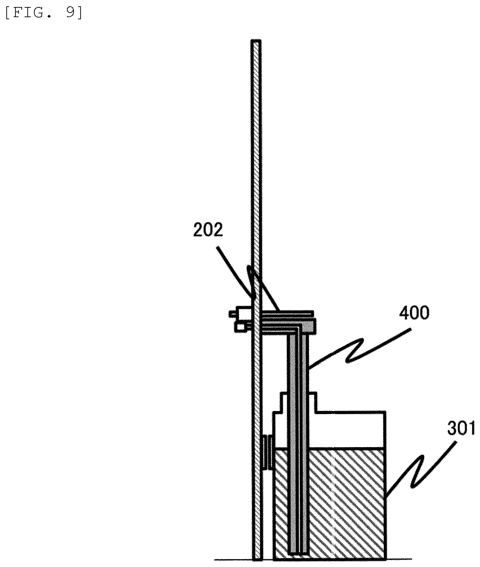

First, the process of installing the system reagent will be described with reference to FIGS. 5 to 9. FIG. 5 is a flowchart at the time of installing the reagent bottle. FIG. 6 is a diagram illustrating a positional relationship between the reagent bottle and the stopper at the time of step S4 in FIG. 5. FIG. 7 is a diagram illustrating the positional relationship between the reagent bottle and the stopper at step S6 in FIG. 5. FIG. 8 is a diagram illustrating the positional relationship between the reagent bottle and the stopper at the time of step S7 in FIG. 5. FIG. 9 is a diagram illustrating the positional relationship between the reagent bottle and the stopper after step S8 in FIG. 5.

When the installation of the reagent bottle 301 is started (FIG. 5, step S1), first, the control unit 131 determines whether the reagent bottle installation unit 200 in which the user attempts to install the reagent bottle 301 is empty based on the information from the RFID reader 350 (step S2). When it is determined that the reagent bottle installation unit 200 is empty, the process proceeds to step S3. On the other hand, a case where it is determined that the reagent bottle installation unit 200 is not empty is a case where there is a reagent bottle 301 already in use, and thus the user cannot install the reagent bottle 301. At this time, the process proceeds to step S9.

Thereafter, as illustrated in FIG. 6, the user places the reagent bottle 301 to be installed in the reagent bottle installation unit 200. At this time, the stopper drive control unit 131b fastens the stopper 202 at a lock position, and the nozzle drive unit 450 fastens the reagent aspiration nozzle 400 at a rise position.

Accordingly, a state in which the stopper 202 is located between the lower end 402 of the reagent aspiration nozzle 400 and the reagent bottle 301 is maintained, and the reagent aspiration nozzle 400 is prevented from dropping until correct or not of the installed reagent is confirmed, so that it is possible to prevent installation of an incorrect reagent bottle 301 and to prevent liquid dripping from the lower end 402 of the reagent aspiration nozzle 400.

When the user places the reagent bottle 301 in the reagent bottle installation unit 200, the RFID reader 350 can read the information on the RFID tag 309, and thus the RFID reader 350 attempts to read the RFID tag 309 at regular intervals (step S3).

Thereafter, the control unit 131 determines whether the information on the RFID tag 309 can be read by the RFID reader 350, that is, whether the reagent bottle 301 is disposed in the reagent bottle installation unit 200 (step S4). When it is determined that the reagent bottle 301 is installed in the reagent bottle installation unit 200, the process proceeds to step S5. On the other hand, when it is determined that the reagent bottle 301 is not installed, the process returns to step S3 until the reagent bottle 301 is installed, and waits for the reagent bottle 301 to be installed.

The determination in step S2 or step S3 is not limited to the case where the RFID tag 309 is read by the RFID reader 350, and the determination can also be performed based on information from a reagent bottle detection sensor.

After recognizing that the information on the RFID tag 309 of the reagent bottle 301 is read by the RFID tag 309, the reagent determination unit 131a determines whether the reagent bottle 301 installed by the user is correct (step S5).

When it is determined in step S5 that the reagent bottle 301 installed by the user is correct, the stopper drive control unit 131b moves the stopper 202 to a standby position and fastens the stopper 202 as illustrated in FIG. 7 (step S6).

When the stopper 202 is fastened at the standby position, the nozzle drive control unit 131c starts dropping of the reagent aspiration nozzle 400 (step S7), and stops the dropping when the reagent aspiration nozzle 400 is connected to the reagent bottle 301 as illustrated in FIG. 8. In this state, the reagent can be aspirated.

Thereafter, as illustrated in FIG. 9, the stopper drive control unit 131b moves the stopper 202 to the lock position and fastens the stopper 202 (step S8). By fastening the stopper 202 to the lock position, even if the user attempts to remove the reagent bottle 301, the reagent aspiration nozzle 400 interferes with the stopper 202 and thus the reagent aspiration nozzle 400 is prevented from being removed from the reagent bottle 301. Accordingly, it is possible to prevent the user from incorrectly removing the reagent bottle 301 while the reagent bottle 301 is being used.

Returning to step S5, a case where it is determined that the reagent bottle 301 should not be installed is one of a case where the reagent type is different, a case where the expiration date is expired, and a case where the reagent bottle 301 is used in another device. In addition, when the information read from the RFID tag 309 deviates from information that should be read, it is determined that the reagent bottle 301 should not be installed. These determinations are performed by the reagent determination unit 131a of the control unit 131 based on the information read from the RFID tag 309 by the RFID reader 350. When the reagent determination unit 131a determines that the reagent bottle 301 the user attempts to install should not be installed, the process proceeds to step S9.

When it is determined that the reagent bottle 301 the user attempts to install should not be installed, it is desirable to notify the user. Therefore, when it is determined in step S2 that the reagent bottle installation unit 200 is not empty or when it is determined in step S5 that the reagent information is incorrect, the reagent determination unit 131a issues an alarm (step S9) so as to notify the user.

Examples of a notification method include a method of lighting an indicator lamp, a method of displaying the alarm on a user interface, and the like.

For example, the indicator lamp is often disposed in the reagent bottle installation unit 200 in an upper portion or the like of the reagent bottle installation unit 200, and is implemented by a button in which an LED is provided. The indicator lamp is often used to notify the user of a slot in which the reagent bottle needed to be replaced is placed, or to notify the user that an inappropriate reagent is installed by lighting the indicator lamp. In addition, the indicator lamp also serves as the button as described above, and the user presses the indicator lamp when the user finishes the installation of the reagent bottle 301 in the reagent bottle installation unit 200 so that the device can recognize that the installation of the reagent bottle 301 is completed.

Thereafter, the stopper drive control unit 131b keeps fastening the stopper 202 at the lock position (step S10), and ends the process. Therefore, the stopper 202 interferes with the reagent aspiration nozzle 400, and thus the reagent aspiration nozzle 400 is continuously prevented from being dropped to the connection position with the reagent bottle 301. Accordingly, it is possible to prevent the user from installing the reagent bottle 301 that should not be installed. It should be noted that orders of step S9 and step S10 may be reversed.

It is desirable to confirm whether the reagent bottle 301 the user attempts to install can be installed before the reagent aspiration nozzle 400 is connected to the inside of the reagent bottle 301.

When the reagent aspiration nozzle 400 drops to the connection position, the reagent aspiration nozzle 400 is already in contact with the reagent in the reagent bottle 301. Therefore, even if the user notices that the reagent bottle 301 is incorrect due to the notification from the device, mixing with the reagent occurs through the reagent aspiration nozzle 400 and the supply flow path 220 ahead of the reagent aspiration nozzle 400. Since mixing with the reagent that should not be installed may affect analysis performance, complicated additional operations such as cleaning of the reagent aspiration nozzle 400 and the supply flow path 220 are required before replacement with a correct reagent.

In order to prevent this situation, it is fairly useful to determine whether the reagent bottle 301 can be installed at a stage before the reagent aspiration nozzle 400 drops, and to prevent the reagent aspiration nozzle 400 and the reagent from coming into contact with each other when it is determined that the reagent bottle 301 cannot be installed.

When the reagent information is not read within predetermined time in step S3 or step S4, there is a possibility that certain problems occurred, such as the reagent bottle 301 is not installed in an appropriate orientation, replacement of the reagent bottle is forgotten, or a completely different reagent bottle is installed. Therefore, it is desirable that the reagent determination unit 131a issues the alarm also in this case.

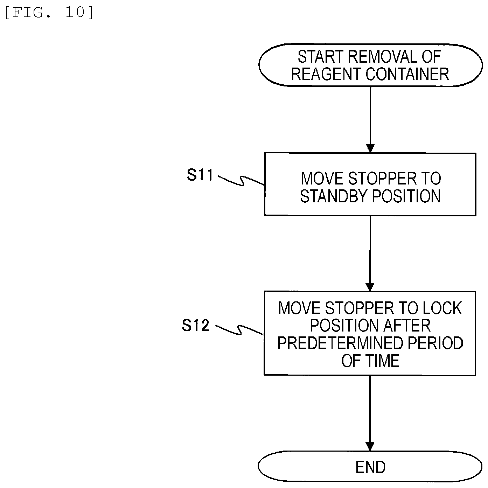

Next, the process of removing the system reagent from the reagent bottle installation unit 200 will be described with reference to FIGS. 10 to 12.

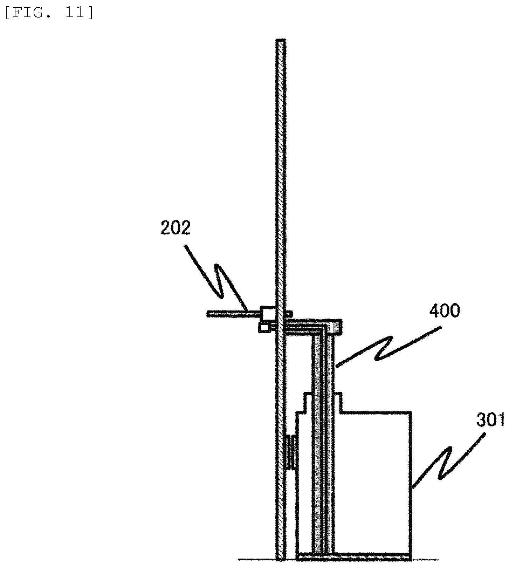

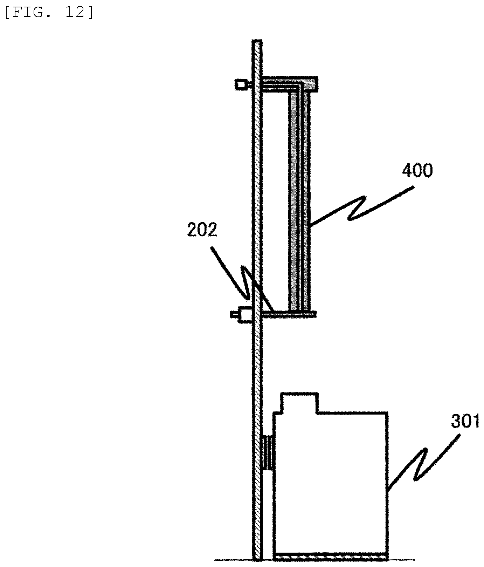

FIG. 10 is a flowchart at the time of removing the reagent bottle. FIG. 11 is a diagram illustrating the positional relationship between the reagent bottle and the stopper at the time of step S11 in FIG. 10. FIG. 12 is a diagram illustrating the positional relationship between the reagent bottle and the stopper at the time of step S12 in FIG. 10.

Examples of a case where the reagent bottle 301 needs to be replaced include a case where the reagent bottle 301 is empty, a case where the expiration date of the reagent is expired, a case where the user explicitly instructs the device to replace the reagent, and a case where the device determines that the installed reagent is unusable based on a quality control result. These determinations are performed by the reagent determination unit 131a of the control unit 131.

When it is determined that the replacement is necessary, the control unit 131 notifies the user of the reagent replacement by blinking the indicator lamp or the like, and as illustrated in FIG. 11, the stopper drive control unit 131b moves the stopper 202 to the standby position and fastens the stopper 202 (step S11).

In this state, since the reagent aspiration nozzle 400 can be raised, the nozzle drive unit 450 raises the reagent aspiration nozzle 400, and stops and fastens the reagent aspiration nozzle 400 after completion of the raising.

After predetermined time elapses, as illustrated in FIG. 12, the stopper drive control unit 131b moves the stopper 202 to the lock position and fastens the stopper 202 (step S12). Accordingly, the user can pull out the reagent bottle 301. The user can easily recognize whether the reagent bottle 301 may be removed by, for example, whether the reagent aspiration nozzle 400 rises and the stopper 202 is located between the lower end 402 of the reagent aspiration nozzle 400 and the reagent bottle 301.

In this state, the next installation of the reagent bottle 301 as described above is prepared.

When the reagent bottle 301 remains to be connected at the connection position within predetermined time after step S12, there is a possibility that a problem occurred, such as replacement of the reagent bottle 301 is forgotten, and it is preferable that the control unit 131 issues the alarm.

Next, effects of the present embodiment will be described.

The automatic analyzer 1 according to the present embodiment described above includes the stopper 202 that is disposed on the movement path of the reagent aspiration nozzle 400 of the nozzle unit 210 and prevents the reagent aspiration nozzle 400 from being inserted into the reagent bottle 301.

Accordingly, two purposes, namely the installation of the incorrect reagent bottle 301 and the incorrect removal of the reagent bottle 301 during use of the reagent, can be implemented by a configuration and an operation of the stopper 202 located between the reagent aspiration nozzle 400 and the reagent bottle 301 and the driving mechanism of the stopper 202, and thus a configuration of the device can be simplified while space is saved as compared with that in the related art.

Further, even when liquid dripping from the lower end 402 of the reagent aspiration nozzle 400 occurs at the time of replacing the reagent bottle 301, the stopper 202 can receive the dripping liquid and prevent the dripping liquid from coming into contact with the user. In particular, the configuration is particularly suitable for a location where a container containing an organic solvent as the reagent is used.

In addition, since the stopper 202 is disposed at the position where the length L1 from the upper end 404 to the lower end 402 of the reagent aspiration nozzle 400 is equal to the movement distance L2 of the reagent aspiration nozzle 400, occurrence of liquid dripping from the lower end 402 of the reagent aspiration nozzle 400 at the time of replacing the reagent bottle 301 can be prevented, and thus the reagent can be more reliably prevented from coming into contact with the user.

Further, the stopper drive control unit 131b that drives and controls the stopper 202 is further provided, the stopper drive control unit 131b fastens the stopper 202 except for the timing at which the reagent bottle 301 is replaced and hinders the movement of the reagent aspiration nozzle 400, so that it is possible to reliably prevent an incorrect reagent bottle 301 from being installed, and thus it is possible to perform more stable specimen analysis.

In addition, the RFID reader 350 that reads the reagent information recorded on the RFID tag 309 attached to the reagent bottle 301 is further provided. The stopper drive control unit 131b drives the stopper 202 and does not hinder the movement of the reagent aspiration nozzle 400 when it is determined that the reagent bottle 301 is correct, and does not drive the stopper 202 and hinders the movement of the reagent aspiration nozzle 400 when it is not determined that the reagent bottle 301 is correct. Therefore, when the reagent bottle 301 is installed in the reagent bottle installation unit 200, it is possible to automatically determine whether the installed reagent is appropriate and notify the user of the determination, and burden on the user can thus be further reduced.

Further, the nozzle drive control unit 131c that controls the rise and drop operations of the reagent aspiration nozzle 400 is further provided, and the nozzle drive control unit 131c fastens the reagent aspiration nozzle 400 except for the timing at which the reagent bottle 301 is replaced, so that it is possible to reliably prevent an incorrect reagent bottle 301 from being installed, and thus it is possible to perform more stable specimen analysis.

In addition, the RFID reader 350 that reads the reagent information recorded on the RFID tag 309 attached to the reagent bottle 301 is further provided. The nozzle drive control unit 131c drives the reagent aspiration nozzle 400 when it is determined that the reagent bottle 301 is correct, and does not drive the reagent aspiration nozzle 400 when it is not determined that the reagent bottle 301 is correct. Therefore, when the reagent bottle 301 is installed in the reagent bottle installation unit 200, it is possible to automatically determine whether the installed reagent is appropriate and notify the user of the determination, and the burden on the user can thus be further reduced.

### Reference Signs List

1: Automatic immunoanalyzer
100: Conveying line
100A: Rack
100B: Specimen container
101: Reagent bottle
102: Reagent disc
103: Specimen dispensing mechanism
104: Reagent dispensing mechanism
105: Magnetic particle stirring mechanism
106: Reaction container
107: Dispensing tip
108: Magazine
109: Incubator
110: Reaction container disposal unit
111: Dispensing tip mounting position
112: Dispensing tip disposal location
113: Conveying mechanism
114: Magnetic separation unit
115: Conveying mechanism for BF separation
116: Reaction solution aspiration mechanism
117: Cleaning solution A discharge mechanism
118: Cleaning solution B discharge mechanism
119: Detection solution discharge mechanism
120: Detector
121: Detector conveying mechanism
131: Control unit
131a: Reagent determination unit
131b: Stopper drive control unit (stopper control unit)
131c: Nozzle drive control unit (nozzle control unit)
132: Recording device
133: Display device
134: Input device
200: Reagent bottle installation unit
202: Stopper
210: Nozzle unit
220: Supply flow path
250: Stopper drive unit
301: Reagent bottle
302: Front in the insertion direction
303: Side
304: Top
305: Bottom
306: Lid
308: Label
309: RFID tag
350: RFID reader
400: Reagent aspiration nozzle
402: Lower end
404: Upper end
450: Nozzle drive unit

## Claims

1. An automatic analyzer comprising:
a reagent bottle installation unit (200) configured to install a reagent bottle (301) containing a reagent used for analysis;
a nozzle unit (210) configured to couple a supply flow path (220) configured to connect a location where the reagent is used and an inside of the reagent bottle (301) installed in the reagent bottle installation unit (200) to the reagent bottle (301);
a stopper (202) disposed on a movement path of a nozzle (400) of the nozzle unit (210) and configured to prevent the nozzle (400) from being inserted into the reagent bottle (301);
a stopper control unit (131b) configured to drive and control the stopper (202);
an RFID reader (350) configured to read reagent information recorded on an RFID tag (309) attached to the reagent bottle (301); and
a nozzle control unit (131c) configured to control rise and drop operations of the nozzle (400),
wherein
when it is determined that the reagent bottle (301) is correct, the stopper control unit (131b) is configured to drive the stopper (202) by retreating the stopper (202) toward the side of the reagent bottle installation in a standby position and not to hinder the movement of the nozzle (400),
when it is not determined that the reagent bottle (301) is correct, the stopper control unit (131b) is configured not to drive the stopper (202) but to hinder the movement of the nozzle (400),
**characterized in that**
the stopper control unit (131b) is further configured to move the stopper (202) to a lock position by making the stopper (202) to protrude from a side of the reagent bottle installation and to fasten the stopper (202) so as to interfere with the nozzle (400) and thus prevent the nozzle (400) from being removed from the reagent bottle (301) except for a timing at which the reagent bottle (301) is replaced, and to hinder a movement of the nozzle (400), and
when replacing the reagent bottle (301), the stopper control unit (131b) is configured to place the stopper (202) so that it is disposed at a position where a lower end (402) of the nozzle (400) and a top side of the stopper (202) are in contact with each other so as to prevent the reagent in the nozzle (400) from accidentally dripping and adhering to a hand or the like of an operator who performs a replacement operation.

2. The automatic analyzer according to claim 1, wherein the stopper (202) is disposed at a position where a length from an upper end to a lower end of the nozzle (400) is equal to a movement distance of the nozzle (400).

3. The automatic analyzer according to claim 1 or 2, further comprising:
an RFID reader (350) configured to read reagent information recorded on an RFID tag (309) attached to the reagent bottle (301),
wherein
when it is determined that the reagent bottle (301) is correct, the nozzle control unit (131c) is configured to drive the nozzle (400), and
when it is not determined that the reagent bottle (301) is correct, the nozzle control unit (131c) is configured not to drive the nozzle (400).

## Patentansprüche

1. Automatisches Analysegerät, umfassend:
eine Reagenzienflaschen-Installationseinheit (200), die dazu konfiguriert ist, eine Reagenzienflasche (301) zu installieren, die ein für die Analyse verwendetes Reagens enthält;
eine Düseneinheit (210), die dazu konfiguriert ist, einen Zufuhrströmungsweg (220) zu koppeln, der dazu konfiguriert ist, einen Ort, an dem das Reagens verwendet wird, und ein Inneres der in der Reagenzienflaschen-Installationseinheit (200) installierten Reagenzienflasche (301) mit der Reagenzienflasche (301) zu verbinden;
einen Stopper (202), der auf einem Bewegungsweg einer Düse (400) der Düseneinheit (210) angeordnet und dazu konfiguriert ist, zu verhindern, dass die Düse (400) in die Reagenzienflasche (301) eingeführt wird;
eine Stopper-Steuereinheit (131b), die dazu konfiguriert ist, den Stopper (202) anzutreiben und zu steuern;
ein RFID-Lesegerät (350), das dazu konfiguriert ist, Reagenzieninformationen zu lesen, die auf einem RFID-Tag (309) aufgezeichnet sind, der an der Reagenzienflasche (301) befestigt ist; und
eine Düsen-Steuereinheit (131c), die dazu konfiguriert ist, Hebe- und Senkoperationen der Düse (400) zu steuern,
wobei
wenn bestimmt wird, dass die Reagenzienflasche (301) korrekt ist, die Stopper-Steuereinheit (131b) dazu konfiguriert ist, den Stopper (202) anzutreiben, indem sie den Stopper (202) zu der Seite der Reagenzienflaschen-Installation in eine Bereitschaftsposition zurückzieht und die Bewegung der Düse (400) nicht behindert,
wenn nicht bestimmt wird, dass die Reagenzienflasche (301) korrekt ist, die Stopper-Steuereinheit (131b) dazu konfiguriert ist, den Stopper (202) nicht anzutreiben, sondern die Bewegung der Düse (400) zu behindern,
**dadurch gekennzeichnet, dass**
die Stopper-Steuereinheit (131b) weiter dazu konfiguriert ist, den Stopper (202) in eine Sperrposition zu bewegen, indem sie den Stopper (202) von einer Seite der Reagenzienflaschen-Installation vorstehen lässt und den Stopper (202) befestigt, um mit der Düse (400) zu interferieren und somit zu verhindern, dass die Düse (400) von der Reagenzienflasche (301) entfernt wird, außer zu einem Zeitpunkt, zu dem die Reagenzienflasche (301) ersetzt wird, und eine Bewegung der Düse (400) zu behindern, und
beim Ersetzen der Reagenzienflasche (301) die Stopper-Steuereinheit (131b) dazu konfiguriert ist, den Stopper (202) so zu positionieren, dass er an einer Position angeordnet ist, an der ein unteres Ende (402) der Düse (400) und eine Oberseite des Stoppers (202) miteinander in Kontakt stehen, um zu verhindern, dass das Reagens in der Düse (400) versehentlich tropft und an einer Hand oder dergleichen eines Bedieners haftet, der einen Ersetzungsvorgang durchführt.

2. Automatisches Analysegerät nach Anspruch 1, wobei der Stopper (202) an einer Position angeordnet ist, an der eine Länge von einem oberen Ende zu einem unteren Ende der Düse (400) gleich einer Bewegungsstrecke der Düse (400) ist.

3. Automatisches Analysegerät nach Anspruch 1 oder 2, weiter umfassend:
ein RFID-Lesegerät (350), das dazu konfiguriert ist, ReagenzienInformationen zu lesen, die auf einem RFID-Tag (309) aufgezeichnet sind, der an der Reagenzienflasche (301) befestigt ist,
wobei
wenn bestimmt wird, dass die Reagenzienflasche (301) korrekt ist, die Düsen-Steuereinheit (131c) dazu konfiguriert ist, die Düse (400) anzutreiben, und
wenn nicht bestimmt wird, dass die Reagenzienflasche (301) korrekt ist, die Düsen-Steuereinheit (131c) dazu konfiguriert ist, die Düse (400) nicht anzutreiben.

## Revendications

1. Analyseur automatique comprenant :
une unité (200) d'installation de bouteille de réactif configurée pour installer une bouteille (301) de réactif contenant un réactif utilisé pour une analyse ;
une unité (210) d'embout configurée pour coupler un chemin (220) d'écoulement d'alimentation configuré pour connecter un emplacement où le réactif est utilisé et un intérieur de la bouteille (301) de réactif installée dans l'unité (200) d'installation de bouteille de réactif à la bouteille (301) de réactif ;
une butée d'arrêt (202) disposée sur un chemin de mouvement d'un embout (400) de l'unité (210) d'embout et configurée pour empêcher l'embout (400) d'être inséré dans la bouteille (301) de réactif ;
une unité (131b) de commande de butée d'arrêt configurée pour entraîner et commander la butée d'arrêt (202) ;
un lecteur RFID (350) configuré pour lire des informations de réactif enregistrées sur une étiquette RFID (309) fixée à la bouteille (301) de réactif ; et
une unité (131c) de commande d'embout configurée pour commander des opérations de levage et de descente de l'embout (400),
dans lequel
lorsqu'il est déterminé que la bouteille (301) de réactif est correcte, l'unité (131b) de commande de butée d'arrêt est configurée pour entraîner la butée d'arrêt (202) en rétractant la butée d'arrêt (202) vers le côté de l'installation de bouteille de réactif dans une position d'attente et pour ne pas empêcher le mouvement de l'embout (400),
lorsqu'il n'est pas déterminé que la bouteille (301) de réactif est correcte, l'unité (131b) de commande de butée d'arrêt est configurée pour ne pas entraîner la butée d'arrêt (202) mais pour empêcher le mouvement de l'embout (400),
**caractérisé en ce que**
l'unité (131b) de commande de butée d'arrêt est en outre configurée pour déplacer la butée d'arrêt (202) jusqu'à une position de verrouillage en amenant la butée d'arrêt (202) à faire saillie depuis un côté de l'installation de bouteille de réactif et pour immobiliser la butée d'arrêt (202) de façon à ce qu'elle interfère avec l'embout (400) et ainsi empêcher que l'embout (400) ne soit ôté de la bouteille (301) de réactif excepté à un moment auquel la bouteille (301) de réactif est remplacée, et pour empêcher un mouvement de l'embout (400), et
lors du remplacement de la bouteille (301) de réactif, l'unité (131b) de commande de butée d'arrêt est configurée pour placer la butée d'arrêt (202) de façon à ce qu'elle soit disposée en une position où une extrémité inférieure (402) de l'embout (400) et un côté supérieur de la butée d'arrêt (202) sont en contact l'une avec l'autre de façon à empêcher le réactif dans l'embout (400) de fuir accidentellement et d'adhérer à une main ou autre d'un opérateur qui exécute une opération de remplacement.

2. Analyseur automatique selon la revendication 1, dans lequel la butée d'arrêt (202) est disposée en une position où une longueur d'une extrémité supérieure à une extrémité inférieure de l'embout (400) est égale à une distance de mouvement de l'embout (400).

3. Analyseur automatique selon la revendication 1 ou 2, comprenant en outre :
un lecteur RFID (350) configuré pour lire des informations de réactif enregistrées sur une étiquette RFID (309) fixée à la bouteille (301) de réactif,
dans lequel
lorsqu'il est déterminé que la bouteille (301) de réactif est correcte, l'unité (131c) de commande d'embout est configurée pour entraîner l'embout (400), et
lorsqu'il n'est pas déterminé que la bouteille (301) de réactif est correcte, l'unité (131c) de commande d'embout est configurée pour ne pas entraîner l'embout (400).
